# EUROPÄISCHE PATENTSCHRIFT

(11) **EP 2 259 949 B1**
(45) Veröffentlichungstag und Bekanntmachung des Hinweises auf die Patenterteilung: **21.09.2011**
(21) Anmeldenummer: 09727379.1
(22) Anmeldetag: 11.02.2009
(51) Int. Cl.: B60L 11/00, B60L 11/18

(54) **ENERGIESPEICHERSYSTEM FÜR EIN SPURGEFÜHRTES FAHRZEUG**
POWER STORAGE SYSTEM FOR A RAIL-GUIDED VEHICLE
SYSTÈME D'ACCUMULATION D'ÉNERGIE POUR UN VÉHICULE SUR RAILS

(30) Priorität: 31.03.2008 DE 102008016739
(43) Veröffentlichungstag der Anmeldung: 15.12.2010
(73) Patentinhaber: Siemens Aktiengesellschaft, 80333 München (DE)
(72) Erfinder: RECHENBERG, Karsten, 91077 Dormitz (DE); ECKERT, Peter, 91058 Erlangen (DE); MEINERT, Michael, 91056 Erlangen (DE)
(86) Internationale Anmeldenummer: PCT/EP2009/051570
(87) Internationale Veröffentlichungsnummer: WO 2009/121656

(56) Entgegenhaltungen:
- EP-A1- 1 691 476
- US-A- 6 066 928
- US-A1- 2005 000 741
- US-A1- 2005 251 299

## Beschreibung

Die Erfindung betrifft ein Energiespeichersystem für ein spurgeführtes Fahrzeug, wobei mindestens ein elektrischer Energiespeicher und mindestens ein elektrochemischer Energiespeicher über mindestens einen Stromrichter mit einer Zuleitung und mit einer Antriebseinheit des Fahrzeuges in Verbindung stehen.

Ein solches Energiespeichersystem ist aus der älteren deutschen Patentanmeldung 10 2007 032 776 bekannt. Als Wandler dienen dort zwei DC/DC-Steller. Der Energieaustausch zwischen der Antriebseinheit und den Energiespeichern des Energiespeichersystems wird durch eine Energiemanagementeinheit gesteuert und/oder geregelt.

Aus der EP 1 424 494 A1 ist ein dieselelektrisches Antriebssystem bekannt, das als Energiespeicher sowohl einen elektrischen Energiespeicher, z. B. einen UltraCap, als auch einen elektrochemischen Energiespeicher, z. B. eine Nickel-Cadmium-Batterie, aufweist. Beim Bekannten sind diese beiden Energiespeicher über einen sogenannten Abwärtswandler miteinander verbunden. Der elektrische Energiespeicher ist direkt an dem Zwischenkreis eines Stromrichters angeschlossen.

Um zum Betrieb der Antriebseinheit die beiden vorhandenen Energiespeicher optimal einsetzen zu können, war bisher eine aufwändige Energiemanagementeinheit nötig.

Der Erfindung liegt die Aufgabe zugrunde, ein Energiespeichersystem für ein spurgeführtes Fahrzeug anzugeben, bei dem unterschiedliche Energiespeicher, z. B. elektrochemische Batterie und/oder UltraCap, völlig unabhängig voneinander betrieben werden können.

Die Aufgabe wird gemäß der Erfindung dadurch gelöst, dass einzelne Phasen des Stromrichters als unabhängige Gleichstromsteller betreibbar sind zum unabhängigen Laden und Entladen unterschiedlicher Energiespeicher.

Stromrichter als solche sind bekannt und werden z. B. in Schienenfahrzeugen den Antriebsmotoren vorgeschaltet.

Mit dem Einsatz eines herkömmlichen Stromrichters zur Verbindung unterschiedlicher Energiespeicher mit der Antriebseinheit wird in überraschender Weise der Vorteil erzielt, dass mit einfacheren Mitteln als bisher verschiedene Energiespeicher, z. B. UltraCaps und elektrochemische Batterien, völlig unabhängig voneinander betrieben werden können. Es sind unterschiedliche Spannungen an den Energiespeichern möglich, aber auch unterschiedliche Lade- bzw. Entladekennlinien für die Energiespeicher und auch unterschiedliche Leistungen der Energiespeicher. Es ist nur ein handelsüblicher Stromrichter, gegebenenfalls mit modifizierter Software, notwendig, um die bisher notwendigen Wandler mit Energiemanagementeinheit zu ersetzen.

Die Unteransprüche nennen vorteilhafte Weiterbildungen und Ausgestaltungen der Erfindung.

Ein Beispiel für einen elektrischen Energiespeicher ist ein Doppelschichtkondensator oder ein supraleitender Energiespeicher. Ein Beispiel für einen elektrochemischen Energiespeicher ist eine NiMH-Batterie. Verbunden mit den Energiespeichern sind z. B. Chopperdrosseln, eine oder mehrere Steuer- oder Regeleinheiten und diverse Schaltgeräte.

Der elektrische Energiespeicher ist beispielsweise ein UltraCap und der elektrochemische Energiespeicher ist beispielsweise eine Batterie.

Beispielsweise ist der Stromrichter ein mehrphasiger Pulswechselrichter. Bei diesem kann mit geeigneter Software jede Phase unabhängig als Gleichstromsteller betrieben werden. Daher ist dieser besonders gut dazu geeignet, für jeden der Energiespeicher einen eigenen Chopper bereit zu stellen.

Beispielsweise ist der Stromrichter dreiphasig und jede der drei Phasen dient als Chopper zum Regeln der Lade- und Entladevorgänge. An einen dreiphasigen Pulswechselrichter können sogar drei separate Energiespeicher oder zwei Energiespeicher, wobei bei einem Energiespeicher zwei Phasen zur Leistungserhöhung parallel arbeiten, oder nur ein Energiespeicher, bei dem zur Leistungserhöhung drei Phasen parallel arbeiten, angeschlossen sein.

Das Energiespeichersystem besteht beispielsweise aus einem ein- oder mehrphasigen Stromrichter mit oder ohne integriertem oder additivem Bremssteller bzw. Überspannungsbegrenzer, einem und/oder mehreren elektrischen Energiespeichern, z. B. auf Basis von Doppelschichtkondensatoren, einem und/oder mehreren elektrochemischen Energiespeichern, z. B. auf Basis von NiMH-Batterien, einer entsprechenden Anzahl von Chopperdrosseln, einer oder mehrerer Steuer-/Regeleinheiten und diversen Schaltgeräten.

Das Energiespeichersystem ist z. B. ohne Drossel oder über eine oder mehrere Drosseln mit dem Zwischenkreis des Antriebssystems verbunden. Das Energiespeichersystem kann auch über eine oder mehrere Drosseln direkt mit der Netzspannung verbunden sein.

Durch diese Kombination eines elektrischen und eines elektrochemischen Energiespeichers mit einem herkömmlichen Stromrichter lassen sich die Vorteile der Systeme, nämlich die spezifische Leistung der elektrischen Speicher und der hohe spezifische Energieinhalt elektrochemischer Energiespeicher, in Verbindung mit der handelsüblichen Stromrichtertechnologie optimal ausnutzen.

Außerdem lässt sich dieses Hybrid-Energiespeichersystem einfach in neue und auch nachträglich in existierende ältere Fahrzeuge integrieren. Die Lebensdauer insbesondere der elektrochemischen Energiespeicher wird durch die kombinierte Betriebsweise deutlich erhöht.

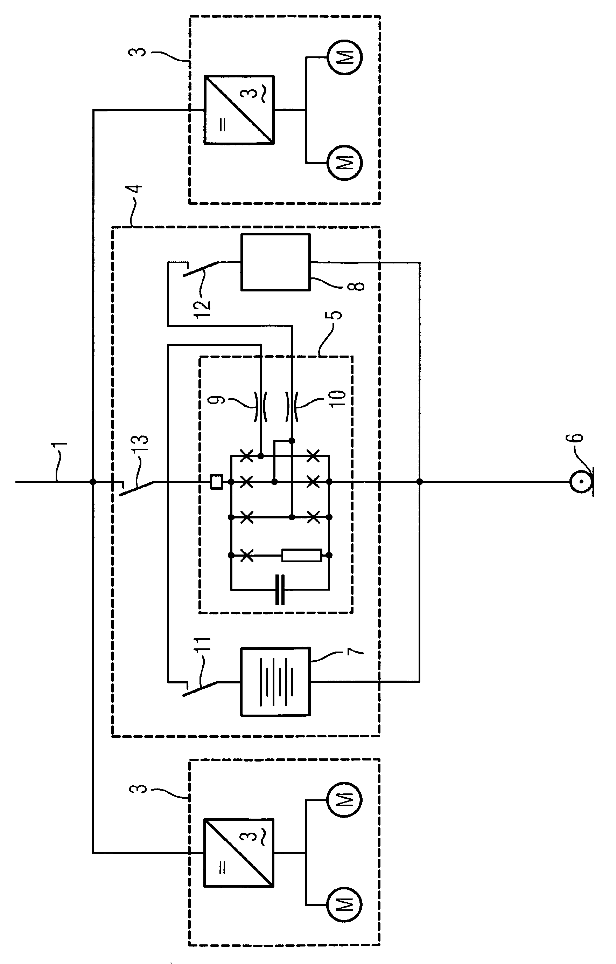

Das Energiespeichersystem nach der Erfindung wird anhand der Zeichnung näher erläutert:
Die Zeichnung zeigt eine Zuleitung 1, wobei diese Zuleitung 1 mit Antriebseinheiten 3 verbunden ist. Die Antriebseinheiten 3 können mindestens eine nicht gezeigte Netzdrossel in der jeweiligen Zuleitung enthalten. Die Zuleitung 1 ist auβerdem mit einem Energiespeichersystem 4 verbunden. Das Energiespeichersystem 4 kann mindestens eine nicht gezeigte Netzdrossel in der jeweiligen Zuleitung enthalten. Im Energiespeichersystem 4 ist die Zuleitung 1 an den Zwischenkreis eines Pulswechselrichters 5 angeschlossen, der auch mit einem Erdungspunkt 6 verbunden ist. An einer Phase des Pulswechselrichters 5 ist ein elektrochemischer Energiespeicher 7 angeschlossen. An einer anderen Phase des Pulswechselrichters 5 ist als elektrischer Energiespeicher ein UltraCap 8 angeschlossen. Sowohl der elektrochemische Energiespeicher 7 als auch der UltraCap 8 sind mit dem Erdungspunkt 6 verbunden. In den Verbindungsleitungen zwischen den beiden Energiespeichern und dem Pulswechselrichter 5 sind Drosseln 9, 10 und außerdem optional Schalter 11, 12 oder Sicherungen angeordnet. Auch in der Zuleitung 1 befindet sich vor dem Energiespeichersystem 4 optional ein Schalter 13.

Der Pulswechselrichter 5 dient in der gezeigten Schaltung als zuverlässiger Chopper für den elektrochemischen Energiespeicher 7 und für den UltraCap 8.

## Patentansprüche

1. Energiespeichersystem für ein spurgeführtes Fahrzeug, wobei mindestens ein elektrischer Energiespeicher und mindestens ein elektrochemischer Energiespeicher (7) über mindestens einen Stromrichter (5) mit einer Zuleitung (1) und mit einer Antriebseinheit (3) des Fahrzeugs in Verbindung stehen, **dadurch gekennzeichnet, dass** einzelne Phasen des Stromrichters als unabhängige Gleichstromsteller betreibbar sind zum unabhängigen Laden und Entladen unterschiedlicher Energiespeicher.

2. Energiespeichersystem nach Anspruch 1, **dadurch gekennzeichnet, dass** der Stromrichter (5) ein ein- oder mehrphasiger Gleichstromsteller ist.

3. Energiespeichersystem nach einem der Ansprüche 1 oder 2, **dadurch gekennzeichnet, dass** der Stromrichter (5) dreiphasig ist und dass jede der drei Phasen als Chopper zum Regeln von Lade- und Entladevorgängen dient.

4. Energiespeichersystem nach einem der Ansprüche 1 bis 3, **dadurch gekennzeichnet, dass** der Stromrichter (5) mit einem integrierten oder additiven Bremssteller oder mit einem Überspannungsbegrenzer ausgestattet ist.

5. Energiespeichersystem nach Anspruch 4, **dadurch gekennzeichnet, dass** der integrierte oder additive Bremssteller oder der Überspannungsbegrenzer neben der Begrenzung einlaufender Überspannungen auch für die Entladung der elektrischen Energiespeicher verwendbar ist.

6. Energiespeichersystem nach einem der Ansprüche 1 bis 5, **dadurch gekennzeichnet, dass** der Stromrichter (5) über eine oder mehrere Netzdrosseln mit der Zuleitung (1) verbunden ist.

7. Energiespeichersystem nach einem der Ansprüche 1 bis 6, **dadurch gekennzeichnet, dass** der elektrische Energiespeicher und der elektrochemische Energiespeicher (7) über Drosseln (9, 10) mit dem Stromrichter (5) verbunden sind.

8. Energiespeichersystem nach einem der Ansprüche 1 bis 7, **dadurch gekennzeichnet, dass** das spurgeführte Fahrzeug eine Lokomotive, ein Triebzug, eine Rangierlokomotive, eine Stadtbahn, eine Metro oder eine Straßenbahn ist.

9. Energiespeichersystem nach einem der Ansprüche 1 bis 8, **dadurch gekennzeichnet, dass** der elektrochemische Energiespeicher eine Bleibatterie, ein Nickel Cadmium Batterie, eine Nickelmetallhydridbatterie, eine Lithiumionenbatterie, eine Zebra Batterie, eine NaS-Batterie oder eine Redox-Flow-Batterie ist.

10. Energiespeichersystem nach einem der Ansprüche 1 bis 9, **dadurch gekennzeichnet, dass** der elektrische und der elektrochemische Energiespeicher eine Einheit darstellen.

11. Energiespeichersystem nach Anspruch 10, **dadurch gekennzeichnet, dass** die Einheit ein PseudoCap ist.

12. Energiespeichersystem nach einem der Ansprüche 1 bis 11, **dadurch gekennzeichnet, dass** es innerhalb des Fahrzeuges, auf dem Fahrzeugdach oder unterflur angeordnet ist.

13. Energiespeichersystem nach einem der Ansprüche 1 bis 12, **dadurch gekennzeichnet, dass** es aus mehreren Einzelsystemen besteht.

14. Energiespeichersystem nach einem der Ansprüche 1 bis 13, **dadurch gekennzeichnet, dass** im Fahrzeug eine zentrale Energieregeleinheit oder mehrere Energieregeleinheiten vorhanden sind.

15. Energiespeichersystem nach einem der Ansprüche 1 bis 14, **dadurch gekennzeichnet, dass** die Energiespeicher in Reihe und/oder parallel geschaltet sind.

## Claims

1. Energy storage system for a track-guided vehicle, with at least one electrical energy store and at least one electrochemical energy store (7) being connected via at least one converter (5) to a supply line (1) and to a drive unit (3) for the vehicle, **characterized in that** individual phases of the converter can be operated as independent direct-current controllers for independent charging and discharging of different energy stores.

2. Energy storage system according to Claim 1, **characterized in that** the converter (5) is a single-phase or polyphase direct-current controller.

3. Energy storage system according to one of Claims 1 or 2, **characterized in that** the converter (5) has three phases, and **in that** each of the three phases is used as a chopper for regulation of charging and discharging processes.

4. Energy storage system according to one of Claims 1 to 3, **characterized in that** the converter (5) is equipped with an integrated or additive braking controller, or with an overvoltage limiter.

5. Energy storage system according to Claim 4, **characterized in that** the integrated or additive braking controller or the overvoltage limiter can be used not only to limit incoming overvoltages but also for discharging the electrical energy store.

6. Energy storage system according to one of Claims 1 to 5, **characterized in that** the converter (5) is connected via one or more power supply system inductors to the supply line (1).

7. Energy storage system according to one of Claims 1 to 6, **characterized in that** the electrical energy store and the electrochemical energy store (7) are connected via inductors (9, 10) to the converter (5).

8. Energy storage system according to one of Claims 1 to 7, **characterized in that** the track-guided vehicle is a locomotive, a prime mover, a shunting locomotive, a city railroad, a metro or a tram system.

9. Energy storage system according to one of Claims 1 to 8, **characterized in that** the electrochemical energy store is a lead-acid battery, a nickel-cadmium battery, a nickel-metal-hydride battery, a lithium-ion battery, a zebra battery, an NaS battery or a redox-flow battery.

10. Energy storage system according to one of Claims 1 to 9, **characterized in that** the electrical energy store and the electrochemical energy store represent one unit.

11. Energy storage system according to Claim 10, **characterized in that** the unit is a pseudocap.

12. Energy storage system according to one of Claims 1 to 11, **characterized in that** Energy storage system is arranged within the vehicle, on the vehicle roof or under the floor.

13. Energy storage system according to one of Claims 1 to 12, **characterized in that** Energy storage system comprises a plurality of individual systems.

14. Energy storage system according to one of Claims 1 to 13, **characterized in that** a central energy regulating unit or a plurality of energy regulating units is or are provided in the vehicle.

15. Energy storage system according to one of Claims 1 to 14, **characterized in that** the energy stores are connected in series and/or in parallel.

## Revendications

1. Système d'accumulation d'énergie pour un véhicule guidé, dans lequel au moins un accumulateur d'énergie électrique et au moins un accumulateur ( 7 ) d'énergie électrochimique sont en liaison avec une alimentation ( 1 ) et un groupe ( 3 ) moteur du véhicule par au moins un convertisseur ( 5 ) de courant, **caractérisé en ce que** des phases individuelles du convertisseur de courant peuvent fonctionner comme régulateurs de courant continu indépendants pour charger et décharger indépendamment des accumulateurs d'énergie différents.

2. Système d'accumulation d'énergie suivant la revendication 1, **caractérisé en ce que** le convertisseur ( 5 ) de courant est un régulateur de courant continu monophasé ou polyphasé.

3. Système d'accumulation suivant l'une des revendications 1 ou 2, **caractérisé en ce que** le convertisseur ( 5 ) de courant est triphasé et **en ce que** chacune des trois phases sert de dispositif de découpage pour la régulation d'opérations de charge et de décharge.

4. Système d'accumulation suivant l'une des revendications 1 à 3, **caractérisé en ce que** le convertisseur ( 5 ) de courant est équipé d'un régleur de frein intégré ou additif ou d'un limiteur de surtension.

5. Système d'accumulation d'énergie suivant la revendication 4, **caractérisé en ce que** le régleur de frein intégré ou additif ou le limiteur de surtension peut être utilisé, outre pour la limitation de surtension, également pour la décharge des accumulateurs d'énergie électrique.

6. Système d'accumulation suivant l'une des revendications 1 à 5, **caractérisé en ce que** le convertisseur ( 5 ) de courant est relié à l'alimentation ( 1 ) par une bobine de réseau ou par plusieurs bobines de réseau.

7. Système d'accumulation suivant l'une des revendications 1 à 6, **caractérisé en ce que** l'accumulateur d'énergie électrique et l'accumulateur ( 7 ) d'énergie électrochimique sont reliés au convertisseur ( 5 ) de courant par des bobines ( 9, 10 ).

8. Système d'accumulation suivant l'une des revendications 1 à 7, **caractérisé en ce que** le véhicule guidé est une locomotive, une rame automotrice, une locomotive de manoeuvre, un chemin de fer urbain, un métro ou une voie de chemin de fer.

9. Système d'accumulation suivant l'une des revendications 1 à 8, **caractérisé en ce que** l'accumulateur d'énergie électrochimique est un accumulateur au plomb, un accumulateur nickel cadmium, un accumulateur nickel hydrure métallique, un accumulateur aux ions lithium, un accumulateur zebra, un accumulateur NaS ou un accumulateur redox-flow.

10. Système d'accumulation suivant l'une des revendications 1 à 9, **caractérisé en ce que** l'accumulateur d'énergie électrique et l'accumulateur d'énergie électrochimique constituent une unité.

11. Système d'accumulation d'énergie suivant la revendication 10, **caractérisé en ce que** l'unité est un pseudocap.

12. Système d'accumulation suivant l'une des revendications 1 à 11, **caractérisé en ce qu'**il est disposé à l'intérieur du véhicule, sur le toit du véhicule ou sous la caisse.

13. Système d'accumulation suivant l'une des revendications 1 à 12, **caractérisé en ce qu'**il est constitué de plusieurs systèmes individuels.

14. Système d'accumulation suivant l'une des revendications 1 à 13, **caractérisé en ce qu'**un groupe central de régulation d'énergie ou plusieurs groupes centraux de régulation d'énergie sont présents dans le véhicule.

15. Système d'accumulation suivant l'une des revendications 1 à 14, **caractérisé en ce que** les accumulateurs d'énergie sont montés en série et/ou en parallèle.
